# EUROPEAN PATENT SPECIFICATION

(11) **EP 1 352 026 B1**
(45) Date of publication and mention of the grant of the patent: **21.07.2004**
(21) Application number: 01998594.4
(22) Date of filing: 20.11.2001
(51) Int. Cl.: C08L 63/00, C08K 3/22, H01B 3/40, C08L 51/00, C08K 5/521

(54) **FILLED EPOXY RESIN SYSTEM HAVING HIGH MECHANICAL STRENGTH VALUES**
GEFÜLLTES EPOXIDHARZSYSTEM MIT HOHER MECHANISCHER FESTIGKEIT
SYSTEME DE RESINE EPOXY AVEC CHARGE POSSEDANT DES VALEURS DE RESISTANCE MECANIQUE ELEVEES

(30) Priority: 29.11.2000 CH 231600
(43) Date of publication of application: 15.10.2003
(73) Proprietor: Vantico AG, 4057 Basel (CH)
(72) Inventor: BEISELE, Christian, 79424 Auggen (DE)
(74) Representative: Maué, Paul Georg
(86) International application number: PCT/EP2001/013431
(87) International publication number: WO 2002/044273

(56) References cited:
- EP-A- 0 717 073
- WO-A-00/55254

## Description

The present invention relates to curable epoxy resin casting materials comprising a core/shell polymer as toughness modifier, and aluminium oxide and a certain phosphate compound as filler, to crosslinked products obtainable by thermally curing such casting materials, and to the use of such casting materials as electrically insulating construction material for electrical or electronic components, especially in the manufacture of so-called "spacers" for gas-insulated switching systems and generator switches.

In the course of switching operations in gas-insulated switching systems, cleavage products and secondary products (SF₄ and HF) can form from the insulating gas (SF₈); the cleavage products and secondary products can in turn attack silicon-containing materials (formation of SiF₄ and H₂SiF₆) and, as a result, lead to failure of the switching systems.

Preference is therefore given to the use of aluminium oxide as filler for epoxy resin systems that are used for the manufacture of parts of switching systems in which aggressive cleavage products of SF₆ occur.

As a result of ever higher temperature demands on the materials, the resistance to heat distortion and, as a result, the glass transition temperature (Tg) of the epoxy resin systems must accordingly be increased ever further. That generally results in a deterioration in mechanical properties, especially fracture toughness. Preference is therefore given to the use of so-called core/shell polymers as toughness modifiers in order to improve the toughness of filled epoxy resin systems.

As EP-A2-0 717 073 teaches, and as confirmed by experience in practice, the action of core/shell toughness modifiers is however, according to EP-A-0 391 183, not as good in the case of epoxy resin systems filled with aluminium oxide as when quartz powder is used as filler, and consequently is often inadequate.

As a solution to that toughness problem, EP-A2-0 717 073 has proposed that the surface of the aluminium oxide used be treated with silanes. The use of silanes, however, re-introduces silicon into the formulation, whereas the original intention had been to avoid silicon by employing aluminium oxide instead of quartz. The silane, which is responsible for better adhesion of the aluminium oxide in the epoxy resin matrix, can however, like quartz, be attacked by the SF₆ cleavage products and secondary products, which can ultimately lead to a reduction in mechanical strength under operational conditions.

The aim of the present invention was therefore to solve the problem of the inadequate action of core/shell polymers as toughness modifiers in conjunction with aluminium oxide, on the one hand without adding silicon-containing compounds and on the other hand without laborious pretreatment of the surface of the filler.

It has now been found that the mentioned disadvantages can be avoided in epoxy resin casting materials filled with aluminium oxide by combining the toughness modifiers with certain phosphates. The systems obtained as a result are distinguished by significantly better mechanical properties, especially in terms of tensile strength, tensile elongation and fracture toughness. Such systems are therefore especially suitable for uses in SF₆-insulated switching systems.

The present invention accordingly relates to curable epoxy resin casting materials comprising
a) an epoxy resin having on average more than one 1,2-epoxy group in the molecule,
b) a curing agent for the epoxy resin,
c) a core/shell polymer,
d) aluminium oxide having a particle size distribution of from 0.1 to 300 µm, and
e) a compound of the general formula
   (RO)ₙPO(OH)₃₋ₙ wherein n = 1 or 2 and R = R'-(O-CₘH₂ₘ)ₐ-(O-CO-CₓH₂ₓ)_{b}-, wherein a = 0-50, b = 0-50, m = 1-6, x = 1-5 and R' = C₄₋₂₄alkenyl, C₄₋₂₄alkyl, C₅₋₃₀aryl, CH₂=CH-CO- or CH₂=C(CH₃)-CO-.

As component a) for the curable epoxy resin casting materials according to the invention there can be used the customary aromatic or cycloaliphatic epoxy compounds used in epoxy resin technology. Examples of such Epoxy compounds are:
I) Polyglycidyl and poly(β-methylglycidyl) esters, obtainable by reacting an aromatic or cycloaliphatic compound having at least two carboxyl groups in the molecule and epichlorohydrin and β-methylepichlorohydrin, respectively. The reaction is advantageously carried out in the presence of bases.
   Aromatic polycarboxylic acids, for example phthalic acid, isophthalic acid and terephthalic acid, may be used as the compound having at least two carboxyl groups in the molecule. Examples of cycloaliphatic polycarboxylic acids are tetrahydrophthalic acid, 4-methyltetrahydrophthalic acid, hexahydrophthalic acid and 4-methylhexahydrophthalic acid.
II) Polyglycidyl or poly(β-methylglycidyl) ethers, obtainable by reacting an aromatic or -cycloaliphatic compound having at least two free alcoholic hydroxyl groups andlor phenolic hydroxyl groups and epichlorohydrin or β-methylepichlorohydrin under alkaline conditions, or in the presence of an acid catalyst and subsequently treating with an alkali.
   The glycidyl ethers of this kind are derived, for example, from mononuclear phenols, e.g. resorcinol or hydroquinone, or they are based on polynuclear phenols, such as bis(4-hydroxyphenyl)methane, 4,4'-dihydroxybiphenyl, bis(4-hydroxyphenyl)sulfone, 1,1,2,2-tetrakis(4-hydroxyphenyl)ethane, 2,2-bis(4-hydroxyphenyl)propane, 2,2-bis(3,5-dibromo-4-hydroxyphenyl)propane and on novolaks, obtainable by condensation of aldehydes, e.g. formaldehyde, acetaldehyde, chloral or furfuraldehyde, with phenols, e.g. phenol, or with phenols substituted on the nucleus by chlorine atoms or C₁-C₉alkyl groups, e.g. 4-chlorophenol, 2-methylphenol or 4-*tert* butylphenol, or by condensation with bisphenols, such as those of the kind mentioned above.
   They are, however, also derived, for example, from cycloaliphatic alcohols, e.g. 1,4-cyclohexanedimethanol, bis(4-hydroxycyclohexyl)methane or 2,2-bis(4-hydroxycyclohexyl)-propane, or they have aromatic nuclei, e.g. N,N-bis(2-hydroxyethyl)aniline or p,p'-bis(2-hydroxyethylamino)diphenylmethane.
III) The expression "cycloaliphatic epoxy resin" is understood within the context of this invention to mean any epoxy resin having cycloaliphatic structural units, that is to say it includes cycloaliphatic glycidyl compounds and β-methylglycidyl compounds as well as epoxy resins based on cycloalkylene oxides.
   Suitable cycloaliphatic glycidyl compounds and β-methylglycidyl compounds are the glycidyl esters and β-methylglycidyl esters of cycloaliphatic polycarboxylic acids such as tetrahydrophthalic acid, 4-methyltetrahydrophthalic acid, hexahydrophthalic acid, 3-methylhexahydrophthalic acid and 4-methylhexahydrophthalic acid.
   Further suitable cycloaliphatic epoxy resins are the diglycidyl ethers and β-methylglycidyl ethers of cycloaliphatic alcohols, such as 1,2-dihydroxycyclohexane, 1,3-dihydroxycyclohexane and 1,4-dihydroxycyclohexane, 1,4-cyclohexanedimethanol, 1,1-bis(hydroxymethyl)-cyclohex-3-ene, bis(4-hydroxycyclohexyl)methane, 2,2-bis(4-hydroxycyclohexyl)propane and bis(4-hydroxycyclohexyl)sulfone.
   Examples of epoxy resins having cycloalkylene oxide structures are bis(2,3-epoxycyclopentyl) ether, 2,3-epoxycyclopentylglycidyl ether, 1,2-bis(2,3-epoxycyclopentyl)ethane, vinylcyclohexene dioxide, 3,4-epoxycyclohexylmethyl 3',4'-epoxycyclohexanecarboxylate, 3,4-epoxy-6-methylcyclohexylmethyl 3',4'-epoxy-6'-methylcyclohexanecarboxylate, bis(3,4-epoxycyclohexylmethyl) adipate and bis(3,4-epoxy-6-methylcyclohexylmethyl) adipate.
   Preferred cycloaliphatic epoxy resins are bis(4-hydroxycyclohexyl)methanediglycidyl ether, 2,2-bis(4-hydroxycyclohexyl)propanediglycidyl ether, tetrahydrophthalic acid diglycidyl ester, 4-methyltetrahydrophthalic acid diglycidyl ester, 4-methylhexahydrophthalic acid diglycidyl ester, 3,4-epoxycyclohexylmethyl 3',4'-epoxycyclohexanecarboxylate and especially hexahydrophthalic acid diglycidyl ester.
   The cycloaliphatic and aromatic epoxy resins preferably used can also be used in combination with aliphatic epoxy resins. As "aliphatic epoxy resins" there can be used epoxidation products of unsaturated fatty acid esters. Preference is given to the use of epoxy-containing compounds that are derived from mono- and poly-fatty acids having from 12 to 22 carbon atoms and an iodine number of from 30 to 400, for example lauroleic acid, myristoleic acid, palmitoleic acid, oleic acid, gadoleic acid, erucic acid, ricinoleic acid, linoleic acid, linolenic acid, elaidic acid, licanic acid, arachidonic acid and clupanodonic acid. For example, the epoxidation products of soybean oil, linseed oil, perilla oil, tung oil, oiticica oil, safflower oil, poppyseed oil, hemp oil, cottonseed oil, sunflower oil, rapeseed oil, polyunsaturated triglycerides, triglycerides from euphorbia plants, groundnut oil, olive oil, olive kernel oil, almond oil, kapok oil, hazelnut oil, apricot kernel oil, beechnut oil, lupin oil, corn oil, sesame oil, grapeseed oil, lallemantia oil, castor oil, herring oil, sardine oil, menhaden oil, whale oil, tall oil, and derivatives thereof are suitable.
   Also suitable, moreover, are more highly unsaturated derivatives, which can be obtained by subsequent dehydrogenation reactions of those oils.
   The olefinic double bonds of the unsaturated fatty acid radicals of the above-mentioned compounds can be epoxidised by known methods, for example by reaction with hydrogen peroxide, optionally in the presence of a catalyst, with an alkyl hydroperoxide or with a peracid, for example performic acid or peracetic acid.
   Within the context of the invention, both the completely epoxidised oils and the partially epoxidised derivatives which still contain free double bonds can be used for component (a).
   Preference is given to the use of epoxidised soybean oil and epoxidised linseed oil.
   If cycloaliphatic or aromatic epoxy resins are used in combination with aliphatic epoxy resins, the advantageous weight ratio of the cycloaliphatic or aromatic component to the aliphatic component is between 1:0 and 0.6:0.4.
IV) Poly(N-glycidyl) compounds, obtainable by dehydrochlorination of the reaction products of epichlorohydrin with aromatic amines containing at least two amine hydrogen atoms. Such amines are, for example, aniline, bis(4-aminophenyl)methane, m-xylylenediamine or bis(4-methylaminophenyl)methane.
   It is also possible, however, to use epoxy resins in which the 1,2-epoxy groups are bonded to different hetero atoms or functional groups; such compounds include, for example, the N,N,O-triglycidyl derivative of 4-aminophenol and the glycidyl ether-glycidyl ester of salicylic acid.

Mixtures of epoxy resins can also be used.

For preparation of the curable epoxy resin casting materials according to the invention, preference is given to the use, as component a), of a liquid or solid, aromatic or cycloaliphatic, glycidyl ether or ester, especially a diglycidyl ether of bisphenol A or F or a cycloaliphatic diglycidyl ester.

Suitable solid aromatic epoxy resins are compounds having melting points above room temperature up to about 250°C. The melting points of the solid epoxy compounds are preferably in the range from 50 to 150°C. Such solid epoxy compounds are known and, in some cases, commercially available, It is also possible to use, as solid polyglycidyl ethers and solid polyglycidyl esters, the advancement products obtained by pre-lengthening liquid polyglycidyl ethers and esters.

For preparation of the curable epoxy resin casting materials according to the invention, there can be used, as component b), the customary curing agents for epoxy resins, for example dicyandiamide, polycarboxylic acids, polycarboxylic anhydrides, polyamines, amine-group-containing adducts of amines and polyepoxy compounds, polyols, and catalysts that bring about the polymerisation of the epoxy groups.

Suitable polycarboxylic acids are, for example, aliphatic polycarboxylic acids, e.g. maleic acid, oxalic acid, succinic acid, nonyl- or dodecyl-succinic acid, glutaric acid, adipic acid, pimelic acid, suberic acid, azelaic acid and dimerised or trimerised linoleic acid, cycloaliphatic polycarboxylic acids, e.g. tetrahydrophthalic acid, methylendomethylenetetrahydrophthalic acid, hexachloroendomethylenetetrahydrophthalic acid, 4-methyltetrahydrophthalic acid, hexahydrophthalic-acid and 4-methylhexahydrophthalic acid, or aromatic polycarboxylic acids, e.g. phthalic acid, isophthalic acid, terephthalic acid, trimellitic acid, pyromellitic acid and benzophenone-3,3',4,4'-tetracarboxylic acid, and the anhydrides of the mentioned polycarboxylic acids.

As polyamines there can be used for the curable epoxy resin casting materials according to the invention aliphatic, cycloaliphatic, aromatic or heterocyclic amines, for example ethylenediamine, propane-1,2-diamine, propane-1,3-diamine, N,N-diethylethylenediamine, hexamethylenediamine, diethylenetriamine, triethylenetetramine, tetraethylenepentamine, N-(2-hydroxyethyl)-, N-(2-hydroxypropyl)- and N-(2-cyanoethyl)-diethyltriamine, 2,2,4-trimethylhexane-1,6-diamine, 2,3,3-trimethylhexane-1,6-diamine, N,N-dimethyl- and N,N-diethylpropane-1,3-diamine, ethanolamine, m- and p-phenylenediamine, bis(4-aminophenyl)-methane, aniline-formaldehyde resins, bis(4-aminophenyl)sulfone, m-xylylene-diamine, bis(4-aminocyclohexyl)methane, 2,2-bis(4-aminocyclohexyl)propane, 2,2-bis(4-amino-3-methylcyclohexyl)propane, 3-aminomethyl-3,5,5-trimethylcyclohexylamine (isophoronediamine) and N-(2-aminoethyl)piperazine, and also polyamino amides, for example those derived from aliphatic polyamines and dimerised or trimerised fatty acids.

Suitable aliphatic polyols for the curable epoxy resin casting materials according to the invention are, for example, ethylene glycol, diethylene glycol and higher poly(oxyethylene) glycols, propane-1,2-diol or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, pentaerythritol and sorbitol.
As aromatic polyols there can be used for the curable epoxy resin casting materials according to the invention, for example, mononuclear phenols, e.g. resorcinol, hydroquinone and N,N-bis(2-hydroxyethyl)aniline, or polynuclear phenols, e.g. p,p'-bis(2-hydroxyethylamino)diphenylmethane, bis(4-hydroxyphenyl)methane, 4,4'-dihydroxybiphenyl, bis(4-hydroxyphenyl)sulfone, 1,1,2,2-tetrakis(4-hydroxyphenyl)ethane, 2,2-bis(4-hydroxyphenyl)propane, 2,2-bis(3,5-dibromo-4-hydroxyphenyl)propane and novolaks, obtainable by condensation of aldehydes, e.g. formaldehyde, acetaldehyde, chloral and furfuraldehyde, with phenols, e.g. phenol, or with phenols substituted on the nucleus by chlorine atoms or by C₁-C₉alkyl groups, e.g. 4-chlorophenol, 2-methylphenol or 4-*tert*-butylphenol, or by condensation with bisphenols, such as those of the kind mentioned above.

For curing of the curable epoxy resin casting materials according to the invention it is also possible to use catalytically acting curing agents, for example tertiary amines, e.g. 2,4,6-tris(dimethylaminomethyl)phenol and other Mannich bases, N-benzyldimethylamine and triethanolamine; alkali metal alkanolates, e.g. the sodium alcoholate of 2,4-dihydroxy-3-hydroxymethylpentane; zinc salts of alkanoic acids, e.g. zinc octanoate; Friedel-Crafts catalysts, e.g. boron trifluoride and complexes thereof (e.g. boron trifluoride-amine complexes, and chelates obtained by reaction of boron trifluoride with, for example, 1,3-diketones), sulfonium salts or heterocyclic ammonium salts, e.g. quinolinium salts, mixed with benzopinacol.

Mixtures of curing agents may also be used for the casting resin materials according to the invention.

The compositions according to the invention may, where appropriate, additionally comprise a curing accelerator. Suitable accelerators will be known to the person skilled in the art. As examples there may be mentioned: complexes of amines, especially tertiary amines, with boron trichloride or boron trifluoride; tertiary amines, e.g. benzyldimethylamine; urea derivatives, e.g. N-4-chlorophenyl-N',N'-dimethylurea (monuron); unsubstituted or substituted imidazoles, e.g. imidazole and 2-phenylimidazole.

When dicyandiamide, polycarboxylic acids and anhydrides thereof are used it is possible to use as accelerators tertiary amines or salts thereof, quaternary ammonium compounds or alkali metal alkanolates. Preferred accelerators are tertiary amines, especially benzyldimethylamine, and imidazoles (e.g. 1-methylimidazole). For compositions that comprise epoxidised oils, imidazoles (e.g. 1-methylimidazole) are especially suitable.

The curing agents and, where appropriate, accelerators are used in the customary effective amounts, that is to say in amounts sufficient for curing the compositions according to the invention. The ratio of the resin system/curing agent/accelerator components is dependent upon the nature of the compounds used, the requisite curing rate and the properties desired in the end product and can be readily determined by the person skilled in the art. In general there are used from 0.4 to 1.6 equivalents, preferably from 0.8 to 1.2 equivalents, of reactive groups of the curing agent, e.g. amino or anhydride groups, per epoxy equivalent. The curing accelerators are normally used in amounts of from 0.1 to 20 parts by weight per 100 parts by weight of epoxy resin.
The casting resin materials according to the invention preferably comprise, as component b), a polycarboxylic anhydride, especially an aromatic or cycloaliphatic polycarboxylic anhydride.

The toughness modifiers used as component c), in the form of core/shell polymers, usually have a soft core of an elastomeric material which is insoluble in the epoxy resin. Grafted onto that core is a shell of a polymeric material which preferably contains no groups capable of reacting with oxiranes. The core/shell polymer can also be a so-called multicore/shell polymer, for example one built up in the sequence: soft core, hard shell, soft shell and hard shell. Such polymers are described, for example, in GB-A-2 039 496.
The polymeric material of the shell can be uncrosslinked, slightly crosslinked or highly crosslinked. Core/shell materials having a highly crosslinked polymeric shell are described, for example, in EP-A 776 917.

Examples of elastomers that may be used as the core material are polybutadiene, a polybutadiene derivative, polyisoprene, polychloroisoprene, silicone rubber, polysulfide, poly(meth)acrylic acid ester and co- or ter-polymers thereof with polystyrene, and polyacrylonitrile.

Examples of polymeric shell materials are polystyrene, polyacrylonitrile, polyacrylate and polymethacrylate mono-, co- or ter-polymers, and styrene/acrylonitrile/glycidyl methacrylate terpolymers.

The size of such core/shell particles is advantageously from 0.05 to 30 µm, preferably from 0.05 to 15 µm. Preference is given to the use of core/shell particles of less than 1 µm in size.

The core/shell polymers can be prepared, for example, in the manner described in US-A 4 419 496, EP-A-0 045 357 or in EP-A 776 917.

The casting material toughness modifiers according to the invention preferably contain no reactive groups that could react with the epoxy resin in question.

Preference is given to the use of core/shell polymers having a core of polybutadiene or polybutadiene/polystyrene. Such a core material is preferably partially crosslinked. Further core materials are polyacrylates and polymethacrylates, especially polyacrylic acid esters and polymethacrylic acid esters and co- or ter-polymers thereof.
The core material preferably comprises polybutadiene, polybutylacrylate or poly(meth)acrylic acid ester and co- or ter-polymers thereof with polystyrene.

The shell preferably consists of polymers based on methyl methacrylate, methacrylic acid cyclohexyl ester, acrylic acid butyl ester, styrene and methacrylonitrile.

Polymethyl methacrylate is preferably used as the shell material.

The amount of toughness modifier in the curable epoxy resin casting materials according to the invention is preferably from 1 to 30 % by weight, especially from 2 to 20 % by weight, more especially from 5 to 15 % by weight, based on the total of components a) and c).

In the curable epoxy resin casting materials according to the invention, components a) and c) preferably are together in the form of a suspension, which is in addition storage-stable and contains the toughness modifier in homogeneous distribution. Such suspensions can be prepared by either
1., when liquid epoxy resins are used, adding the aqueous emulsion of the toughness modifier, optionally in the presence of a solvent, to the epoxy resin and distilling off the water or water/solvent mixture *in vacuo,* or
2., when solid epoxy resins are used, melting the solid epoxy resin or dissolving it in a suitable solvent, and adding the aqueous emulsion of the toughness modifier to the epoxy resin and then distilling off the water or water/solvent mixture *in vacuo.*

Such storage-stable suspensions of an epoxy resin and a toughness modifier suspended therein are suitable, in simple and practical manner, for the preparation of curable epoxy resin compositions wherein the toughness modifier is also homogeneously distributed in the epoxy resin composition, it being possible for the latter likewise to be in the form of a suspension. From the aspect of processing technology, such suspensions consequently simplify the preparation of curable epoxy resin compositions having homogeneous distribution of a toughness modifier contained therein. In addition, a certain consistency of quality is advantageously achieved when preparing such epoxy resin compositions.

The finely divided aluminium oxide used as component d) has a particle size distribution of from about 0.1 to about 300 µm, it being possible for the sizes of the primary particles to be from 0.1 to 20 µm. It is also possible to use aluminium oxides that have not been comminuted to primary particle size.

Preference is given to the use, as component d), of an aluminium oxide powder having a particle size distribution of from 0.1 to 200 µm, more preferably from 0.1 to 150 µm, especially from 0.1 to 100 µm, more especially from 0.5 to 60 µm, most especially from 1 to 40 µm.

The proportion of component d) in the curable epoxy resin casting materials according to the invention is generally from 20 to 80 % by weight, preferably from 40 to 80 % by weight, especially from 50 to 75 % by weight, based on the total curable epoxy resin casting material.

As component e) there is used a hydroxyl-group-containing phosphate compound of the general formula (RO)ₙPO(OH)₃₋ₙ wherein n=1 or 2 and
R = R'-(O-CₘH₂ₘ)ₐ-(O-CO-CₓH₂ₓ)_{b}-, wherein a = 0-50, b = 0-50, m = 1-6, x = 1-5 and R' = C₄₋₂₄alkenyl, C₄₋₂₄alkyl, C₅₋₃₀aryl, CH₂=CH-CO- or CH₂=C(CH₃)-CO-.

Preference is given to the use, as component e), of a compound of the general formula (RO)ₙPO(OH)₃₋ₙ wherein n = 2 and
R = R'-(O-CₘH₂ₘ)ₐ-(O-CO-CₓH₂ₓ)_{b}-, wherein a = 1, b = 0 or 1, preferably b = 0, m = 2, x = 5 and R' = CH₂=C(CH₃)-CO-.

The proportion of component e), in terms of amount, based on the total composition, is from 0.1 to 5 % by weight, preferably from 0.5 to 1.5 % by weight.

The compounds are, in some cases, commercially available, for example as "PM-2".

The epoxy resin casting materials according to the invention may additionally comprise, if desired, further finely divided fillers. Suitable fillers are those customarily used in epoxy resin technology, although those that may potentially react with SF₆ or with cleavage products and secondary products thereof either are to be avoided or appropriate caution must be exercised in respect of the amounts added. Suitable fillers are, for example, the following: metal powder, wood flour, semi-metal and metal oxides, for example titanium oxide and zirconium oxide, semi-metal and metal nitrides, for example silicon nitride, boron nitrides and aluminium nitride, semi-metal and metal carbides (SiC and boron carbides), metal carbonates (dolomite, chalk, CaCO₃), metal sulfates (barite, gypsum), ground minerals, and natural or synthetic minerals.

The curable epoxy resin casting materials according to the invention are prepared by methods known *per se,* for example using known mixing apparatus, e.g. stirrers, kneaders, rollers or, in the case of solid materials, dry mixers.

The curing of the epoxy resin casting materials according to the invention to form coatings, encapsulations or the like is carried out in the conventional manner for epoxy resin technology, as described, for example, in the "Handbook of Epoxy Resins", 1967, by H. Lee and K. Neville.

The compositions according to the invention are medium-viscosity casting resin systems that can be fully cured by heat. In the cured state, they are thermoset materials of relatively high rigidity, having a glass transition temperature (Tg) of about from 140 to 150°C.

The curable epoxy resin compositions according to the invention are excellently suitable as a casting resin for processing in the conventional vacuum casting technique and also in the APG (automatic pressure gelation) technique as an electrically insulating construction material for electrical or electronic components and especially for the manufacture of so-called "spacers" for gas-insulated switching systems and generator switches.

### Examples

The starting materials used were:

| | |
|---|---|
| epoxy resins | MY 740: bis-A resin having 5.25 - 5.55 eq/kg (Vantico AG) |
| | CY 5595: core/shell modified bisphenol A resin having a core-shell content of 9 % and 4.7 - 5 eq/kg (Vantico AG) |
| curing agents | HY 5996: modified carboxylic anhydride (Vantico AG) |
| | HY 1102: carboxylic anhydride (Vantico AG) |
| accelerator | DY 070 (Vantico AG) |
| HDA | highly disperse Al₂O₃ having a surface area of 100 m²/g |
| aluminium oxide | aluminium oxide powder having a primary particle size of about 4 - 5 micrometres |
| additive | bis[2-(methacryloyloxy)ethyl] phosphate = "PM-2" (e.g. Nippon Kayaku) |

### Preparation method for Reference Examples and Examples of the invention

All the Examples were prepared by the following method using the above-mentioned starting materials.

### 1) Preparation of the resin mixtures

All of the components of the resin mixture in question are weighed into a Drais mixer in such amounts that in each case the batch size is 1 kg. The batch is then stirred for one hour at 60°C under a vacuum of 3 mbar. The vessel is then vented, and the resin mixture is discharged and cooled to room temperature.

### 2) Preparation of the curing agent mixtures

All of the components of the curing agent mixture in question are weighed into a Drais mixer in such amounts that in each case the batch size is 1 kg. The batch is then stirred for one hour at 60°C under a vacuum of 3 mbar. The vessel is then vented, and the curing agent mixture is discharged and cooled to room temperature.

### 3) Preparation of the resin/curing agent mixtures

500 g of the resin mixture prepared according to 1) and
500 g of the corresponding curing agent mixture prepared according to 2) are together weighed into a metal vessel, heated to 50°C on a heating plate, with stirring by means of a propeller stirrer, and intimately mixed for 10 minutes. The mixing vessel is then evacuated to 3 mbar for 5 minutes, as a result of which the complete mixtures are formed.

### 4) Production of the test plates

The complete mixture prepared according to 3) is poured into moulds heated to 80°C for producing 4 mm-thick test plates. The moulds are then heated at 80°C for 6 hours and at 140°C for 10 hours and subsequently cooled. After opening the mould, the fully cured complete system is obtained, which is then subjected to the appropriate tests.

The compositions of three Comparison Examples (Ref.) and two Examples of the Invention (Inv.) and the measurement results obtained are set out in Table 1, which follows.

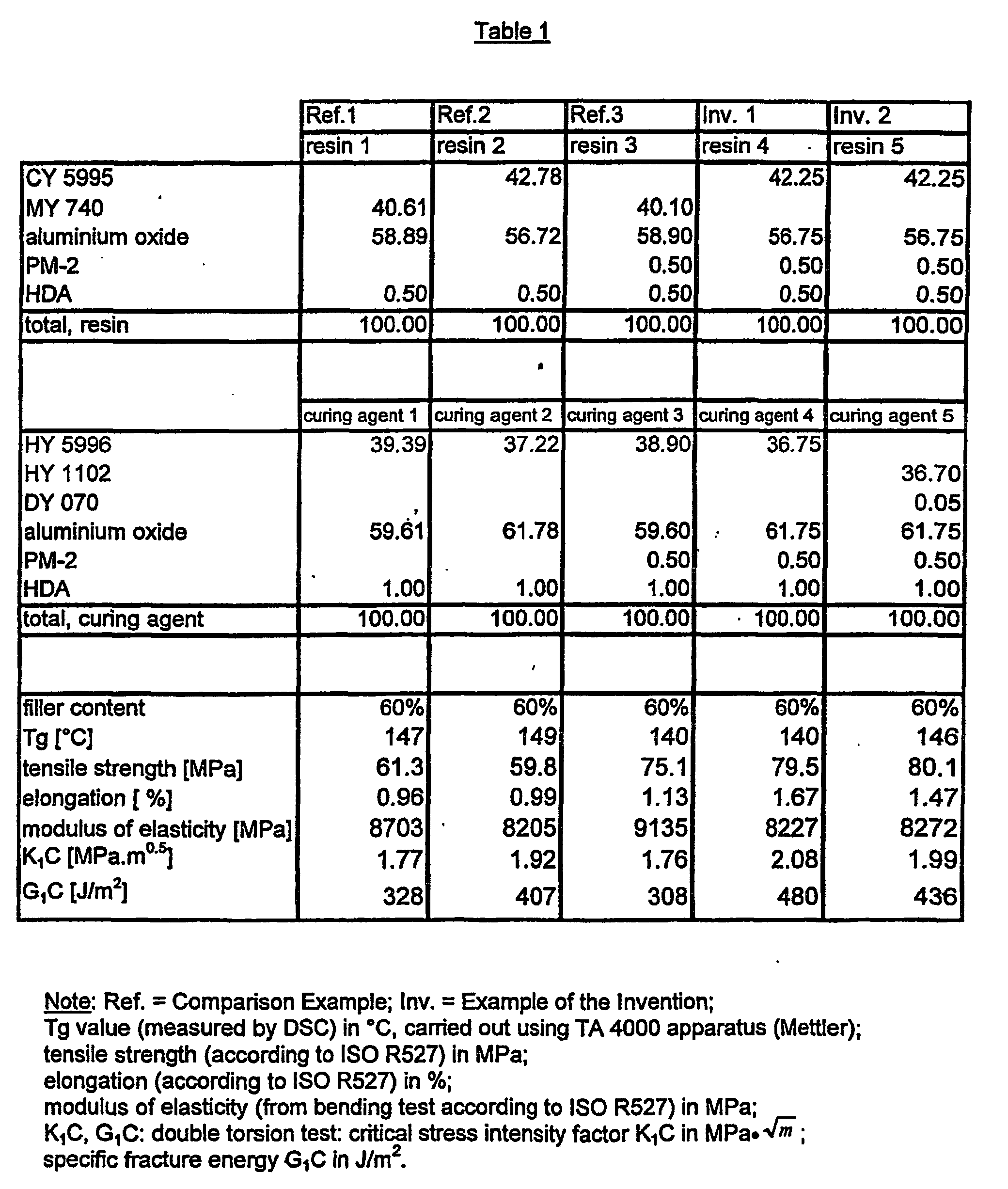

As comparison of Ref. 1 with Ref. 2 shows, the effect on the K₁C due solely to core/shell is only small (Δ = 0.15) and on strength and elongation practically zero.

As comparison of Ref. 1 with Ref. 3 shows, although there is an effect on the strength (Δ = 13.8) due solely to PM-2, the elongation is only slightly better (Δ = 0.07) and the influence on the K₁C is practically zero (Δ = -0.01).
As comparison of Ref. 1 with Inv. 1 then shows, the improvement with respect to strength, elongation and K₁C as a result of the combination of core/shell with PM-2 is significantly greater than that which corresponds to the sum of the individual effects of PM-2 and core/shell.

As can be seen from Inv. 1, this material exhibits very high strength, elongation at break and fracture toughness and is therefore especially advantageous for use in gas-insulated switching systems because it is free from Si. These results are confirmed by Inv. 2, because even though the Tg value is rather higher in comparison, the mechanical values obtained are, surprisingly, equally good.

Using compositions according to the invention it is possible to achieve very good strength, elongation and toughness values at a high Tg level with Al₂O₃-filled epoxy resin systems, without having to use silicon-containing compounds; also, it is not necessary to carry out laborious and expensive treatment of the filler.

## Claims

1. A curable epoxy resin casting material comprising
a) an epoxy resin having on average more than one 1,2-epoxy group in the molecule,
b) a curing agent for the epoxy resin,
c) a core/shell polymer,
d) aluminium oxide having a particle size distribution of from 0.1 to 300 µm, and
e) a compound of the general formula (RO)ₙPO(OH)₃₋ₙ wherein n = 1 or 2 and
R = R'-(O-CₘH₂ₘ)ₐ-(O-CO-CₓH₂ₓ)_{b}-,
wherein a = 0-50, b = 0-50, m = 1-6, x = 1-5 and
R' = C₄₋₂₄alkenyl, C₄₋₂₄alkyl, C₅₋₃₀aryl, CH₂=CH-CO- or CH₂=C(CH₃)-CO-.

2. An epoxy resin casting material according to claim 1, wherein component a) is a liquid or solid, aromatic or cycloaliphatic, glycidyl ether or ester.

3. An epoxy resin casting material according to claim 2, wherein component a) is a diglycidyl ether of bisphenol A or bisphenol F or a cycloaliphatic diglycidyl ester.

4. An epoxy resin casting material according to claim 1, wherein component b) is a polycarboxylic anhydride.

5. An epoxy resin casting material according to claim 1, wherein component c) is a toughness modifier that contains no reactive groups that could react with the epoxy resin a) in question.

6. An epoxy resin casting material according to claim 1, wherein the amount of component c) is from 1 to 30 % by weight, preferably from 2 to 20 % by weight, especially from 5 to 15 % by weight, based on the total of components a) and c).

7. An epoxy resin casting material according to claim 1, wherein component d) is aluminium oxide having a particle size distribution of from 0.1 to 200 µm, preferably from 0.1 to 150 µm, especially from 0.1 to 100 µm, more especially from 0.5 to 60 µm, most especially from 1 to 40 µm.

8. An epoxy resin casting material according to claim 1, wherein the amount of component d) is from 20 to 80 % by weight, preferably from 40 to 80% by weight, especially from 50 to 75 % by weight, based on the total composition.

9. An epoxy resin casting material according to claim 1, wherein component e) is a compound of the general formula (RO)ₙPO(OH)₃₋ₙ wherein n = 2 and
R = R'-(O-CₘH₂ₘ)ₐ-(O-CO-CₓH₂ₓ)_{b}-, wherein a =1, b = 0 or 1, m = 2, x = 5
and R' = CH₂=C(CH₃)-CO-.

10. An epoxy resin casting material according to claim 9, wherein component e) is a compound of formula (RO)₂PO(OH) wherein R = CH₂=C(CH₃)-CO-O-C₂H₄-.

11. An epoxy resin casting material according to claim 1, wherein the amount of component e) is from 0.1 to 5 % by weight, preferably from 0.5 to 1.5 % by weight, based on the total composition.

12. A crosslinked product obtainable by thermally curing a composition according to any one of claims 1 to 11.

13. The use of a curable epoxy resin casting material according to any one of claims 1 to 11 as electrically insulating construction material for electrical or electronic components, especially in the manufacture of so-called "spacers" for gas-insulated switching systems and generator switches.

## Patentansprüche

1. Härtbare Epoxidharz-Giessmasse, enthaltend
a) ein Epoxidharz mit durchschnittlich mehr als einer 1,2-Epoxidgruppe im Molekül,
b) ein Härtungsmittel für das Epoxidharz,
c) ein Core/Shell-Polymer,
d) Aluminiumoxid mit einer Korngrössenverteilung von 0,1 bis 300 µm, und
e) eine Verbindung der allgemeinen Formel (RO)ₙPO(OH)₃₋ₙ, wobei n = 1 oder 2 und R = R'-(O-CₘH₂ₘ)ₐ-(O-CO-CₓH₂ₓ)_{b}- bedeutet,
wobei a = 0-50, b = 0-50, m = 1-6, x = 1-5 und
R' = C₄₋₂₄Alkenyl, C₄₋₂₄Alkyl, C₅₋₃₀Aryl, CH₂=CH-CO- oder CH₂=C(CH₃)-CO-, bedeutet.

2. Epoxidharz-Giessmasse gemäss Anspruch 1, worin die Komponente a) einen flüssigen oder festen aromatischen oder cycloaliphatischen Glycidylether oder -ester darstellt.

3. Epoxidharz-Giessmasse gemäss Anspruch 2, worin die Komponente a) einen Bisphenol A- oder Bisphenol-F-diglycidylether oder einen cycloaliphatischen Diglycidylester darstellt.

4. Epoxidharz-Giessmasse gemäss Anspruch 1, worin die Komponente b) ein Polycarbonsäureanhydrid darstellt.

5. Epoxidharz-Giessmasse gemäss Anspruch 1, worin die Komponente c) einen Zähigkeitsmodifikator darstellt, der keine reaktiven Gruppen aufweist, die mit dem jeweiligen Epoxidharz a) reagieren könnten.

6. Epoxidharz-Giessmasse gemäss Anspruch 1, worin die Menge der Komponente c) 1 bis 30, bevorzugt 2 bis 20, besonders bevorzugt 5 bis 15 Gew.-%, bezogen auf die Summe der Komponenten a) und c), beträgt.

7. Epoxidharz-Giessmasse gemäss Anspruch 1, worin die Komponente d)
Aluminiumoxid mit einer Korngrössenverteilung von 0,1 bis 200, bevorzugt 0,1 bis 150, weiterhin bevorzugt 0,1 bis 100, besonders bevorzugt von 0,5 bis 60, insbesondere bevorzugt von 1 bis 40 µm, darstellt.

8. Epoxidharz-Giessmasse gemäss Anspruch 1, worin die Menge der Komponente d) 20 bis 80, vorzugsweise von 40 bis 80, insbesondere von 50 bis 75 Gew.-%, bezogen auf die Gesamtzusammensetzung, beträgt.

9. Epoxidharz-Giessmasse gemäss Anspruch 1, worin die Komponente e) eine Verbindung der allgemeinen Formel (RO)ₙPO(OH)₃₋ₙ darstellt, wobei n = 2 und
R = R'-(O-CₘH₂ₘ)ₐ-(O-CO-CₓH₂ₓ)_{b}- bedeutet, wobei a = 1, b = 0 oder 1, m = 2, x = 5 und R'= CH₂=C(CH₃)-CO- bedeutet, verwendet.

10. Epoxidharz-Giessmasse gemäss Anspruch 9, worin die Komponente e) eine Verbindung der Formel (RO)₂PO(OH) bedeutet, wobei R = CH₂=C(CH₃)-CO-O-C₂H₄bedeutet.

11. Epoxidharz-Giessmasse gemäss Anspruch 1, worin die Menge der Komponente e) 0.1 bis 5, bevorzugt 0,5 bis 1,5 Gew.-%, bezogen auf die Gesamtzusammensetzung, beträgt.

12. Vernetzte Produkte erhältlich durch thermische Härtung einer Zusammensetzung gemäss einem der Ansprüche 1 bis 11.

13. Verwendung einer härtbaren Epoxidharz-Giessmasse gemäss einem der Ansprüche 1 bis 11 als elektrisch isolierendes Konstruktionsmaterial für elektrische oder elektronische Bauteile, insbesondere zur Herstellung von sogenannten "Spacern" für gasisolierte Schaltanlagen und Generatorenschalter.

## Revendications

1. Matière de résine époxy durcissable à couler comprenant :
a) une résine époxy ayant, en moyenne, plus d'un groupe 1,2-époxy dans la molécule,
b) un agent de durcissement pour la résine époxy,
c) un polymère coeur/coquille,
d) de l'oxyde d'aluminium ayant une distribution granulométrique de 0,1 à 300 *µ*m, et
e) un composé de formule générale (RO)ₙPO(OH)₃₋ₙ où n vaut 1 ou 2 et R représente R'-(O-CₘH₂ₘ)ₐ-(O-CO-CₓH₂ₓ)_{b}-, où a vaut 0 à 50, b vaut 0 à 50, m vaut 1 à 6, x vaut 1 à 5 et R' représente un groupe alcényle en C₄ à C₂₄, alkyle en C₄ à C₂₄, aryle en C₅ à C₃₀, CH₂=CH-CO- ou CH₂=C(CH₃)-CO-.

2. Matière de résine époxy à couler selon la revendication 1, dans laquelle le composant a) est un éther ou un ester glycidylique aromatique ou cycloaliphatique, liquide ou solide.

3. Matière de résine époxy à couler selon la revendication 2, dans laquelle le composant a) est un éther diglycidylique de bisphénol A ou de bisphénol F ou un ester diglycidylique cycloaliphatique.

4. Matière de résine époxy à couler selon la revendication 1, dans laquelle le composant b) est un anhydride polycarboxylique.

5. Matière de résine époxy à couler selon la revendication 1, dans laquelle le composant c) est un modificateur de ténacité qui ne contient pas de groupe réactif qui pourrait réagir avec la résine époxy a) en question.

6. Matière de résine époxy à couler selon la revendication 1, dans laquelle la quantité de composant c) va de 1% à 30% en poids, de préférence de 2% à 20% en poids, en particulier de 5% à 15% en poids, par rapport au total des composants a) et c).

7. Matière de résine époxy à couler selon la revendication 1, dans laquelle le composant d) est de l'oxyde d'aluminium ayant une distribution granulométrique de 0,1 à 200 *µ*m, de préférence de 0,1 à 150 *µ*m, en particulier de 0,1 à 100 *µ*m, plus particulièrement de 0,5 à 60 *µ*m, tout particulièrement de 1 à 40 *µ*m.

8. Matière de résine époxy à couler selon la revendication 1, dans laquelle la quantité de composant d) va de 20% à 80% en poids, de préférence de 40% à 80% en poids, en particulier de 50% à 75% en poids, par rapport au total de la composition.

9. Matière de résine époxy à couler selon la revendication 1, dans laquelle le composant e) est un composé de formule générale (RO)ₙPO(OH)₃₋ₙ où n vaut 2 et R représente R'-(O-CₘH₂ₘ)ₐ-(O-CO-CₓH₂ₓ)_{b}-, où a vaut 1, b vaut 0 ou 1, m vaut 2, x vaut 5 et R' représente CH₂=C(CH₃)-CO-.

10. Matière de résine époxy à couler selon la revendication 9, dans laquelle le composant e) est un composé de formule (RO)₂PO(OH) où R représente CH₂=C(CH₃)-CO-O-C₂H₄-.

11. Matière de résine époxy à couler selon la revendication 1, dans laquelle la quantité de composant e) va de 0,1% à 5% en poids, de préférence de 0,5% à 1,5% en poids, par rapport au total de la composition.

12. Produit réticulé susceptible d'être obtenu en durcissant à chaud une composition selon l'une quelconque des revendications 1 à 11.

13. Utilisation d'une matière de résine époxy durcissable à couler selon l'une quelconque des revendications 1 à 11, en tant que matériau de construction électriquement isolant pour composants électriques ou électroniques, en particulier dans la fabrication de ce que l'on appelle des "butées d'espacement" pour commutateurs de générateurs et systèmes de commutation isolés par un gaz.
